# EUROPÄISCHE PATENTSCHRIFT

(11) **EP 3 924 642 B1**
(45) Veröffentlichungstag und Bekanntmachung des Hinweises auf die Patenterteilung: **28.08.2024**
(21) Anmeldenummer: 20706195.3
(22) Anmeldetag: 17.02.2020
(51) Int. Cl.: F16G 13/16

(54) **MEHRTEILIGES KETTENGLIED EINER ENERGIEFÜHRUNGSKETTE SOWIE QUERSTEG UND SEITENLASCHE HIERFÜR**
MULTI-PART CHAIN LINK OF AN ENERGY CHAIN, AND TRANSVERSE CONNECTING PIECE AND SIDE PLATE THEREFOR
MAILLON EN PLUSIEURS PARTIES D'UNE CHAÎNE PORTE-CÂBLES AINSI QUE TRAVERSE ET ÉCLISSE LATÉRALE ASSOCIÉES

(30) Priorität: 15.02.2019 DE 202019100878 U
(43) Veröffentlichungstag der Anmeldung: 22.12.2021
(73) Patentinhaber: Igus GmbH, 51147 Köln (DE)
(72) Erfinder: DOMMNIK, Jörg, 53819 Neunkirchen-Seelscheid (DE)
(74) Vertreter: Lippert Stachow Patentanwälte Rechtsanwälte
(86) Internationale Anmeldenummer: PCT/EP2020/054129
(87) Internationale Veröffentlichungsnummer: WO 2020/165460

(56) Entgegenhaltungen:
- EP-A2- 0 384 153
- WO-A1-2016/146706
- WO-A1-2016/146706
- WO-A1-95/28582
- CN-U- 208 331 129
- CN-U- 208 331 129
- DE-A1- 102006 027 246
- DE-A1- 19 547 221
- DE-A1- 19 547 221
- DE-C1- 3 408 912
- DE-C1- 3 408 912
- US-A- 5 711 733
- US-A- 5 711 733

## Beschreibung

Die vorliegende Erfindung betrifft allgemein Energieführungsketten zur dynamischen Führung von Leitungen, wie z.B. Schläuche, Kabel oder dergleichen, zwischen zwei Anschlussstellen von denen mindestens eine zu der anderen relativbeweglich ist. Gattungsgemäße Energieführungsketten umfassen eine Vielzahl in Längsrichtung der Energieführungskette verketteter Kettenglieder, die aufeinanderfolgend und jeweils schwenkbar miteinander verbunden sind. Die Seitenlaschen der Kettenglieder sind dabei typisch durch eine Drehgelenkverbindung schwenkbar miteinander zu jeweils einem Laschenstrang an jeder Seite der Energieführungskette verbunden.

Die Erfindung betrifft insbesondere eine Energieführungskette mit Kettengliedern die aus mehreren Einzelteilen zusammengesetzt sind, nämlich im Wesentlichen jeweils aus zwei Seitenlaschen sowie mindestens einem und insbesondere aus zwei separaten gegenüberliegenden Querstegen, welche die beiden Seitenlaschen lösbar miteinander verbinden. Dabei hat jede Seitenlasche einen Laschenkörper aus Kunststoff, der eine Innenseite, die dem Inneren des Kettenglieds zugewandt ist, eine davon abgewandte Außenseite sowie zwei im Wesentlichen parallel zur Längsrichtung der Energieführungskette verlaufende Schmalseiten aufweist. Die separaten Querstege dienen als Traversen zur Verbindung der Seitenlasche und können grundsätzlich jede geeignete Gestaltung aufweisen. Die lösbare Verbindung eines separaten Querstegs mit den Laschen erlaubt u.a. ein erleichtertes Einlegen und ggf. auch Austauschen von Leitungen bei Fertigung und Wartung.

Bei Kettengliedern aus mehreren, insbesondere aus vier Einzelteilen, wird die lösbare Verbindung zwischen den separaten Querstegen und den Seitenlaschen dadurch erzielt, dass jeder separate bzw. als Einzelteil hergestellter Quersteg beidseitig an jedem Ende einen Befestigungsabschnitt umfasst und die Seitenlaschen jeweils an jeder ihrer Schmalseiten einen entsprechenden Befestigungsbereich aufweisen, welcher mit einem Befestigungsabschnitt des Querstegs form- und/oder kraftschlüssig zusammenwirkt.

Eine Bauweise dieser Art, welche sich in der Praxis sehr bewährt hat, ist im Patent DE 35 31 066 C2 bzw. US 4,813,224 A vorgeschlagen worden. Dabei haben die Seitenlaschen als Befestigungsbereiche für die Querstege nach innen vorstehende Rastnasen bzw. Rasthörner mit einem etwa sechseckigen Querschnitt. Auf diesen werden die Querstege mit entsprechenden endseitigen Rastausnehmungen verrastet. Diese Bauweise erlaubt eine robuste und dauerfeste Verbindung zwischen Seitenlaschen und Querstegen. Sie wurde auch in weitere erfolgreiche Gestaltungen mit vierteiligen Kettengliedern aus Kunststoff aufgenommen, wie beispielsweise im Patent EP0803032B1 beschrieben. In DE 34 08 912 C1 dagegen ist das Kettenglied zweiteilig ausgeführt mit einem U-förmigen Grundkörper und einem abnehmbaren Quersteg, welcher durch Rastfedern und Rastnocken in speziell geformten Aufnahmen in den Seitenteilen des Grundkörpers einrastet.

Diese Bauweise der Befestigungsabschnitte an den Querstegen bzw. der Befestigungsbereiche an den Seitenlaschen erfordert aufgrund komplexer Bauteilgeometrie jedoch relativ aufwändige Formwerkzeuge bei der Herstellung in Spritzgusstechnik. Zudem können die nach innen vorstehenden Rastnasen das Einlegen bzw. Ausnehmen von Leitungen im Rahmen der Fertigung bzw. Wartung erschweren.

Eine Lösung ohne nach innen vorstehende Befestigungsbereiche an den Seitenlaschen ist aus dem gattungsfremden Bereich der Energieführungsketten aus Metalllaschen bekannt, deren Fertigungsverfahren sich jedoch in jeglicher Hinsicht von demjenigen für Kunststofflaschen unterscheidet. So wurde beispielsweise im Patent US 4,104,871 A bereits vorgeschlagen, die Seitenlaschen, dort gabelförmige Doppellaschen, mit den Querstegen durch Schraubverbindung zu befestigen. Dieser Ansatz ist für Kettenglieder aus Kunststoffteilen jedoch nur bedingt geeignet und hat sich - trotz derartiger Anregungen wie z.B. in DE 10 2004 017 742 A1 - bisher praktisch nicht durchsetzen können.

Bei Energieführungsketten mit Kettengliedern aus Kunststoffteilen wurden für zweiteilige Kettenglieder aufschwenkbare Verbindungen zwischen einem aufschwenkbaren Quersteg bzw. Öffnungssteg vorgeschlagen, bei denen der Befestigungsbereich an den Seitenlaschen nicht oder nur geringfügig nach innen vorsteht, wie beispielsweise in DE 43 13 075 A1. Hierbei werden Drehzapfen in einer Aufnahme an der Schmalseite lose drehbar eingerastet und die Verbindung wird im geschlossenen Zustand durch eine nach innen vorstehende Rastnase an der Seitenlasche gewährleistet. Diese Bauweise eignet sich jedoch grundsätzlich nur für zweiteilige Kettenglieder mit Seitenlaschen, die einteilig bzw. materialeinheitlich mit einem der beiden Querstege hergestellt sind. Dies wiederum ist herstellungstechnisch ebenfalls verhältnismäßig aufwändig.

Ein Ansatz, welcher nach innen vorstehende Teile der Befestigungsbereiche an den Seitenlaschen vermeidet wurde im Patent DE 41 21 433 C1 vorgeschlagen. Hierbei sind an den gegenüberliegenden Kanten der Seitenlaschen Ausnehmungen zur Aufnahme der Enden der Querstege vorgesehen, welche mit in Abstand zu den Kanten der Laschen einspringenden Hinterschnitten und Vorsprüngen im Bereich der Ausnehmungen versehen sind zur Verbindung mit komplementär geformten Enden der Querstege. Hierbei soll ein Formschluß mit den Hinterschnitten und Vorsprüngen erzielt werden gegen dessen ungewolltes Lösen zusätzliche Verriegelungsmittel vorgesehen sind. Dieser Ansatz ist konstruktiv sehr aufwendig, insbesondere bzgl. der Spritzgussfertigung der Seitenlaschen und der Querstege, somit kostenintensiv und zudem wegen der separaten Verriegelungsmittel auch in der Handhabung nachteilig.

In den Offenlegungsschriften DE 10 2008 060 466 A1 und DE 10 2006 027 246 A1 wurden Kettenglieder nach dem Oberbegriff aus Anspruch 1 vorgeschlagen, nämlich mit Klemmaufnahmen an den Schmalseiten der Seitenlaschen. Die Klemmaufnahmen dienen bei diesen Lösungen zur Befestigung von Querstegen, welche vollständig oder zumindest teilweise aus extrudierten Profilen bzw. Endlosprofilen aus Metall, insbesondere Aluminium hergestellt sind. Diese Bauweise erfordert bedarfsweises Zuschneiden der Querstege auf die gewünschte Breite der Kettenglieder und erhöht u.a. Materialkosten. Ein früherer Ansatz ähnlicher Art findet sich bereits in der älteren Offenlegung EP 0 384 153 A2, bei welcher als Querstege Leichtmetall-Rohrabschnitte formschlüssig in Aufnahmen der Laschen verspannt sind. Hierzu haben - wie auch bei DE 10 2008 060 466 A1 - die Seitenlaschen eine aufwendig herzustellende Geometrie mit Hinterschneidungen.

Eine Aufgabe der vorliegenden Erfindung liegt mithin darin, bei Energieführungsketten mit mehrteiligen Kettengliedern, insbesondere vierteiligen Kettengliedern, eine im Vergleich zum vorstehenden Stand der Technik verbesserte Art der lösbaren Befestigung zwischen zwei Seitenlaschen und zumindest einem von zwei Querstegen vorzuschlagen. Die Verbindung soll möglichst robust sein und dennoch sollen die Seitenlaschen und Querstege durch verhältnismäßig einfache Spritzgusswerkzeuge herstellbar sein.

Gemäß einem ersten Aspekt der vorliegenden Erfindung wird diese Aufgabe gelöst durch eine Energieführungskette nach Anspruch 1 bzw. einen Quersteg nach Anspruch 10.

Bei einer gattungsgemäßen Energieführungskette bzw. einem Kettenglied nach dem Oberbegriff aus Anspruch 1 ist zunächst vorgesehen, dass der Befestigungsbereich einer Seitenlasche zum Befestigen eines Querstegs eine Klemmaufnahme bzw. Randausnehmung im Laschenkörper umfasst, welche in der Schmalseite der Seitenlasche zurückspringt, und dass diese Aufnahme bzw. Ausnehmung zwei in der Längsrichtung gegenüberliegende Klemmflächen aufweist zwischen denen ein komplementär geformter Befestigungsabschnitt eines Querstegs zur Befestigung mit der Seitenlasche eingeklemmt werden kann. Dadurch kann insbesondere eine bestimmungsgemäß feste, insbesondere winkelstabile bzw. unbewegliche, Befestigung erreicht werden, welche sich im Betrieb nicht ungewollt löst.

Dabei bildet somit der Laschenkörper die Klemmflächen, und hält anhand dieser Klemmflächen den eingesetzten Befestigungsabschnitt und damit den Quersteg stabil fest. Dies erlaubt eine feste Verbindung durch Kraftschluss bzw. Reibschluss, in Art einer Klemmverbindung bzw. Pressverbindung, wobei durch Ausnutzung des im Vergleich zum Quersteg massiveren Laschenkörpers und inhärenter Elastizität des Kunststoffs verhältnismäßig hohe Klemm- bzw. Presskräfte erzielbar sind. Mit der erfindungsgemäßen Aufnahme bzw. Ausnehmung bildet sozusagen die Seitenlasche selbst eine Klaue bzw. Klammer in welche ein geometrisch einfacher, z.B. in Vollmaterial ausgeführter, komplementärer Befestigungsabschnitt eingeklemmt bzw. eingepresst werden kann, wobei der gesamte Laschenkörper eine entsprechend hohe Klemm- bzw. Presskraft aufbringen kann. Im Gegensatz dazu bringt im Stand der Technik typisch nur der Quersteg die Haltekraft auf, dieser verfügt jedoch über relativ geringe Materialstärken in den kraftübertragenden Bereichen.

Der komplementäre Befestigungsabschnitt des Querstegs kann im Querschnitt bezogen auf die Aufnahme bzw. Ausnehmung ein Übermaß aufweisen. Der Quersteg sollte nur bei hohem Kraftaufwand jedoch vorzugsweise von Hand, idealerweise werkzeugfrei montierbar und ggf. mit Werkzeug demontierbar sein, z.B. durch Aushebeln mittels eines Flachschraubenziehers.

Erfindungsgemäß wird zur Lösung der erstgenannten Aufgabe in Kombination mit der vorgenannten Klemmaufnahme der Seitenlasche nach Anspruch 1 weiterhin vorgesehen, dass der mindestens eine Quersteg einteilig aus Kunststoff hergestellt ist und im Endbereich an jeden Befestigungsabschnitt anschließend bzw. zwischen Befestigungsabschnitt und Mittelteil zwei Stützvorsprünge mit jeweils einer Stützfläche zur Anlage an der Innenseite der Seitenlasche aufweist. Die beiden Stützvorsprünge stehen insbesondere beidseitig gegenüber dem Mittelteil vor, d.h. bilden jeweils einen Vorsprung in Längsrichtung der Seitenlasche bzw. quer zur Längserstreckung des Querstegs selbst.

Die Kombination aus Klemmaufnahme in der Seitenlasche und Stützvorsprüngen an den Querstegen, welche innenseitig an den Seitenlaschen abstützen ermöglicht eine besonders steife und feste Verbindung zwischen den Seitenlaschen und Querstegen.

Zur Bildung solcher Stützvorsprünge kann der Querschnitt des Querstegs senkrecht zu seiner Längsachse, sowohl in Längsrichtung der Seitenlasche bzw. Energiekette als auch nach innen zum Aufnahmeraum im Kettenglied hin, aufweiten bzw. größer werdend ausgeführt sein.

In Seitenansicht kann das zum anliegenden Abstützen wirksame Flächenmaß jeder der beiden Stützflächen vorzugsweise jeweils mindestens 33%, vorzugsweise mindestens 40% des offenen Querschnitts der Klemmaufnahme betreffen.

Die vorgeschlagene feste Verbindung zwischen Seitenlasche und Quersteg kann in alle drei Raumrichtungen, d.h. um die Längsrichtung, um die Höhenrichtung und um die Querrichtung bzw. Dickenrichtung der Seitenlasche möglichst spielfrei, insbesondere drehfest bzw. verwindungssteif ausgeführt sein, um eine stabile, dauerfeste Kastenform der Kettenglieder zu gewährleisten.

Zusätzlich zum erfindungsgemäßen Kraftschluss kann ergänzend ein Formschluss, eine Rastverbindung oder dgl. durch Formgebung der Aufnahme bzw. Ausnehmung vorgesehen werden.

Durch die Nutzung einer randseitigen Aufnahme bzw. Ausnehmung in der Seitenlasche erübrigt sich zudem die Notwendigkeit seitlich vorstehender Teile zur Bereitstellung eines Befestigungsabschnitts und es kann ein einfacheres Formwerkzeug, sowohl für die Herstellung der Seitenlasche, als auch für den Quersteg eingesetzt werden.

Entsprechend sieht der erste Aspekt der Erfindung bei einer Seitenlasche, vor dass mindestens ein Befestigungsbereich, insbesondere jeder von zwei gegenüberliegenden Befestigungsbereichen, eine Klemmaufnahme im Laschenkörper umfasst, welche zwei in der Längsrichtung gegenüberliegende vom Laschenkörper gebildete Klemmflächen aufweist, zwischen denen ein komplementär geformter Befestigungsabschnitt eines Querstegs kraftschlüssig befestigbar, insbesondere einklemmbar bzw. einpressbar, ist.

Jede Schmalseite verläuft dabei im Wesentlichen parallel zu einer Längsrichtung der Seitenlasche, welche in gestreckter Lage der Längsrichtung der Energieführungskette entspricht. Die Klemmaufnahme springt in der jeweiligen Schmalseite zurück und kann insbesondere als Randausnehmung in der Schmalseite ausgeführt sein.

In einer bevorzugten Weiterbildung ist zur Sicherung des separaten Querstegs gegen Verschiebung senkrecht zur Laschenhauptebene vorgesehen, dass jede Klemmaufnahme einen länglichen und in der Längsrichtung erstreckten Querverriegelungsvorsprung aufweist, um durch Eingriff in eine komplementäre längliche Querverriegelungsnut im Befestigungsabschnitt den Quersteg in Richtung von dessen Längsachse zu halten. Gleichwertig hierzu ist eine umgekehrte Ausführung bei welcher jede Klemmaufnahme eine längliche und in der Längsrichtung erstreckte Querverriegelungsnut aufweist, um durch Eingriff eines komplementären länglichen Querverriegelungsvorsprungs am Befestigungsabschnitt eines Querstegs diesen gegen Verschiebung senkrecht zur Laschenhauptebene zu halten.

Alternativ oder ergänzend kann gegen Querverschiebung vorgesehen sein, dass die Klemmaufnahme bzw. der Befestigungsabschnitt eines Querstegs senkrecht zur Laschenhauptebene zur Außenseite hin ausweitet bzw. einen sich vergrößernden Querschnitt aufweist, z.B. ähnlich einer Feder-Nut Verbindung in Schwalbenschwanzform. Alternativ oder ergänzend kann hierzu auch vorgesehen sein, dass der Befestigungsabschnitt mit einem zur Laschenmitte überragenden, endseitigen Vorsprung eine entsprechende Aussparung an der Außenseite der Seitenlasche übergreift. Die beiden letztgenannten Gestaltungsmöglichkeiten erlauben z.B. auch eine Vorspannung der Stützvorsprünge mit ihren Stützflächen gegen die Innenseite der Seitenlasche.

Nach dem ersten Aspekt der Erfindung hat ein entsprechender als Einzelteil gefertigter Quersteg der beiden Befestigungsabschnitte zwei in Richtung senkrecht zur Längsachse des Querstegs weisende voneinander abgewandte Gegenklemmflächen, zum Zusammenwirken mit den komplementären Klemmflächen einer Seitenlasche. Für eine besonders robuster Befestigung zwischen Quersteg und Seitenlasche wird ein Quersteg nach dem unabhängigen Anspruch 10 vorgeschlagen.

Hierbei hat jeder der beiden Befestigungsabschnitte zwei in Richtung senkrecht zur Längsachse des Querstegs weisende voneinander abgewandte Gegenklemmflächen, zur Zusammenwirkung mit den komplementären Klemmflächen einer Seitenlasche. Weiterhin hat der Quersteg dabei zwei Stützvorsprünge mit jeweils einer Stützfläche zur Anlage an der Innenseite der Seitenlasche. Derartige Stützvorsprünge können im Endbereich an jeden Befestigungsabschnitt anschließend und beidseitig gegenüber dem Mittelteil vorstehend vorgesehen sein und vorzugsweise einteilig, insbesondere materialeinheitlich mit dem Quersteg hergestellt sein.

Dabei hat der Quersteg mindestens einen zwischen diesen Gegenklemmflächen durchgehenden Vollmaterialbereich, um die von der Klemmaufnahme aufgebrachten Haltekräfte aufzunehmen. Der Befestigungsabschnitt für sich betrachtet kann zumindest bereichsweise, insbesondere überwiegend, durchgehend bzw. durchgängig als Vollkörper ausgeführt sein, ausgenommen z.B. eine Querverriegelungsnut. Der Befestigungsabschnitt ist vorzugsweise im Raum zwischen seinen Gegenklemmflächen durchgehend aus Vollmaterial gefertigt, was eine robuste Klemm- bzw. Pressverbindung in der Klemmaufnahme ermöglicht. Durchgehend bezieht sich hierbei auf die Längsrichtung der Seitenlasche bzw. die Richtung senkrecht zur Längsachse des Querstegs.

Der Quersteg kann dabei insbesondere als einteiliger, entlang einer Längsachse erstreckter Körper aus Kunststoff, insbesondere symmetrisch zu einer Mittelebene senkrecht zur Längsachse, hergestellt sein. Er hat typisch einen plattenartigen Mittelteil und beidseitig an jedem Ende jeweils einem Befestigungsabschnitt zur Verbindung mit einer Seitenlasche.

Die gegenüberliegenden Befestigungsabschnitte sind vorzugsweise baugleich und symmetrisch ausgeführt, sodass der Quersteg in beiden Drehausrichtungen an gegenüberliegenden Seitenlaschen befestigbar ist.

In bevorzugter Gestaltung hat der Vollmaterialbereich des Befestigungsabschnitts eine Materialdicke in Richtung der Quersteglängsachse bzw. senkrecht zur Laschenhauptebene die im Wesentlichen gleich der Materialdicke der Seitenlasche in dem Bereich um die Klemmaufnahme ist. Bevorzugt hat der Vollmaterialbereich ferner in Höhenrichtung und senkrecht zur Längsachse eine gegenüber einem plattenartigen mittleren Bereich des Querstegs größere Materialstärke, um eine möglichst feste kraftschlüssige Befestigung in der Klemmaufnahme zu erzielen.

Gegen Verschiebung senkrecht zur Laschenhauptebene bzw. in Richtung der Quersteglängsachse kann jede Klemmaufnahme bzw. jeder Befestigungsabschnitt einen länglichen und in der Längsrichtung erstreckten Querverriegelungsvorsprung aufweisen und entsprechend jeder Befestigungsabschnitt bzw. jede Klemmaufnahme eine komplementäre längliche Querverriegelungsnut aufweisen. Dabei steht vorzugsweise der Querverriegelungsvorsprung von einer Grundfläche der Klemmaufnahme vor und die Querverriegelungsnut ist als Aussparung, insbesondere unterseitig im Befestigungsabschnitt des Querstegs vorgesehen. Durch die längliche Erstreckung wird zudem eine gute Sicherung gegen ein Verschwenken um die Höhenrichtung (Achse in der Laschenhauptebene, senkrecht zur Längsrichtung) erzielt. Hierzu ist es vorteilhaft, wenn Querverriegelungsvorsprung und die Querverriegelungsnut in der Längsrichtung über zumindest einen überwiegenden Teil des Abstands zwischen den Klemmflächen erstreckt sind.

Querverriegelungsvorsprung und Querverriegelungsnut können die Stützflächen der Stützvorsprünge jeweils in kraftübertragender Anlage an der Innenseite der Seitenlasche halten bzw. festlegen. Dank Querverriegelungsvorsprung und Querverriegelungsnut kann optional z.B. auch eine leichte Vorspannung der Stützvorsprünge mit ihren Stützflächen gegen die Innenseite der Seitenlasche erzielt werden.

Für eine selbsttätige Ausrichtung bzw. Zentrierung beim Einfügen des Querstegs in die Seitenlasche ist es vorteilhaft, wenn Querverriegelungsvorsprung und Querverriegelungsnut sich in Richtung der Laschenhauptebene verjüngen bzw. zuspitzen.

Bevorzugt sind beide Klemmaufnahmen an den Schmalseiten einer Seitenlasche identisch geformt und insbesondere mittig und symmetrisch zur Laschenhöhen-Mittelebene angeordnet.

Die Klemmflächen können jeweils zumindest einen konvexen und/oder konkaven Flächenbereich aufweisen. In bevorzugter Ausführungsform ist vorgesehen, dass jede Klemmfläche der Klemmaufnahme einen konvexen Flächenbereich aufweist, welcher vorzugsweise einen überwiegenden Flächenanteil der Klemmfläche darstellt. Dieser kann insbesondere zur Schmalseite bzw. von der Laschenmitte weg aufweiten, z.B. trichter- oder trompetenförmig oder dgl. Dementsprechend haben die Gegenklemmflächen der Querstege bevorzugt zumindest einen korrespondierenden konkaven Flächenbereich. Die konvexen Flächenbereiche der Klemmaufnahmen können dabei zum freien Inneren der Klemmaufnahme hin z.B. ausgebaucht ausgeführt sein.

Diese Formgebung erleichtert u.a. das Einfügen bzw. Verbinden der Querstege in bzw. mit den Klemmaufnahmen der Seitenlaschen, z.B. durch einfaches Eindrücken oder Einschlagen in der Höhenrichtung. Je nach Formgebung kann die Verbindung auch unter leichter Drehung um die Längsachse des Querstegs erleichtert werden. Zusätzlich zum vorzugsweise überwiegenden konvexen Flächenbereich der Klemmflächen kann dieser in einen besonderen, vorzugsweise kleineren konkaven Bereich übergehen um ggf. eine zusätzliche Rastung in Höhenrichtung zu erzielen.

Die konvexen und/oder konkaven Flächenbereiche sind vorzugsweise, im Querschnitt zur Längsachse des Querstegs bzw. in der Laschenhauptebene betrachtet, gerundet ausgeführt, wodurch die Herstellungstoleranzen weniger eng ausfallen.

Die Klemmaufnahme kann grundsätzlich beliebige Formgebung haben, sofern eine stabile kraftschlüssige Verbindung erzielt wird. Die Klemmaufnahme kann insbesondere aber in Form einer beidseitig zur Innenseite und zur Außenseite der Seitenlasche mündenden Randausnehmung an der Schmalseite bzw. zumindest überwiegend als Durchbruch, d.h. von der Innenseite zur Außenseite teilweise oder überwiegend durchgehend offen ausgeführt sein. Die Klemmaufnahme kann vorzugsweise als Randausnehmung integral im Laschenkörper ausgeführt sein, sodass im Bereich der Klemmaufnahmen keine Teile des Laschenkörpers seitlich vorstehen. Dies erleichtert das Einlegen und Ausnehmen von Leitungen bei geöffnetem bzw. noch nicht befestigtem Quersteg.

Für eine winkelsteife Verbindung, insbesondere gegen Spiel um die Höhenrichtung, ist es vorteilhaft, wenn jeder Quersteg einen plattenartigen Mittelteil aufweist und im Endbereich an jeden Befestigungsabschnitt anschließend und beidseitig gegenüber dem Mittelteil vorstehend zwei Stützvorsprünge mit jeweils einer Stützfläche zur Anlage an der Innenseite der Seitenlasche aufweist. Dabei kann der Quersteg vorzugsweise von jedem Stützvorsprung ausgehend eine Verstärkungsstrebe aufweist, welche zur Mitte des plattenartigen Mittelteils verläuft und einteilig mit diesem hergestellt ist. Derartige Verstärkungsstreben verstärken die Stützvorsprünge gegen Verbiegung, ohne dass erhebliche Steigerung der Materialstärke des Querstegs nötig wäre. Sie können für einen günstigen Kraftfluss insbesondere zur Mitte gekrümmt aufeinander zulaufen und an einer Außenseite des Querstegs einteilig bzw. integral mit diesem geformt sein.

In bevorzugter Ausführungsform besteht das Kettenglied aus vier Hauptbestandteilen, nämlich zwei Seitenlaschen und zwei gegenüberliegenden, separaten und vorzugsweise baugleichen Querstegen, zur lösbaren Verbindung der Seitenlaschen miteinander.

Dabei kann jede Seitenlasche und jeder Quersteg dank der vorgeschlagenen Gestaltung der Verbindung bzw. Befestigung kostengünstig als einteiliger Körper aus Kunststoff, insbesondere ohne Hinterschneidungen z.B. als hinterschneidungsfreies Spritzgussteil d.h. in einem preiswerten sog. Auf-/Zu-Spritgusswerkzeug ohne Schieber und mit geringer Taktzeit, hergestellt sein.

Eine Seitenlasche kann einen Laschenkörper aus Kunststoff mit einer Innenseite, einer davon abgewandten Außenseite und zwei im Wesentlichen parallel zu einer Längsrichtung der Seitenlasche verlaufenden Schmalseiten haben;
wobei der Laschenkörper zwei Überlappungsbereiche, jeweils zur gelenkigen Verbindung mit einem entsprechenden Überlappungsbereich einer jeweils in Längsrichtung angrenzenden Seitenlasche, sowie einen mittleren Bereich zwischen den Überlappungsbereichen aufweist. Der mittlere Bereich kann gegenüber den Überlappungsbereichen zumindest bereichsweise eine größere Wandstärke aufweisen. Ferner kann die Seitenlasche jeweils an jeder Schmalseite einen Befestigungsbereich für einen Quersteg haben, in welchem ein separater Quersteg lösbar befestigt wird oder aber ein einteilig mit den Seitenlaschen hergestellter Quersteg angebunden ist.

Der Laschenkörper aus Kunststoff kann zwei Durchgangsöffnungen von der Außenseite zur Innenseite aufweisen, welche im mittleren Bereich zwischen den Befestigungsbereichen vorgesehen sind, d.h. in einem Bereich der Laschenhöhe und der Laschenlänge zwischen den Befestigungsbereichen. Jede Durchgangsöffnung kann jeweils eine zugeordnete Funktionsausnehmung im Laschenkörper haben, in welche sie zur Innenseite hin mündet. Die Funktionsausnehmung kann dabei allgemein einen gegenüber der Durchgangsöffnung vergrößerten Durchmesser haben und als Aussparung bzw. Vertiefung an der Innenseite des Laschenkörpers vorgesehen sein.

Bei Kettengliedern mit Metallaschen ist es bereits bekannt, Löcher im mittleren Bereich der Laschen vorzusehen, insbesondere zum Befestigen von Querstegen bzw. Traversen durch Schraubverbindung, wie z.B. in US 4,104,871 A gezeigt, oder auch zum Verschrauben von Laschenhälften von Gabellaschen aus Stahlblech.

Der Laschenkörper kann aus Kunststoff mit zwei Durchgangsöffnungen vorgesehen sein, welche jeweils eine zugehörige, vergrößerte Funktionsausnehmung an der Lascheninnenseite aufweisen. Durch die Funktionsausnehmung, welche sich mit geringem Aufwand im Spritzguss herstellen lässt, kann eine vielseitige und zugleich einfach einsetzbare Möglichkeit zur Befestigung von Funktionsteilen an den Seitenlaschen geboten werden. Dabei kann z.B. der Boden der Funktionsausnehmung, als gegenüber der Innenseite vertiefte Umrandung der Durchgangsöffnung, für Rastverbindungen, Clipverbindungen oder dgl. dienen.

Die Durchgangsöffnungen und Funktionsausnehmungen können zueinander identisch ausgeführt und symmetrisch zur Längsmittelebene (parallel zur Längsrichtung und kreuzt die Laschenhauptebene senkrecht) und zur Höhenmittelebene (senkrecht zur Längsrichtung und kreuzt die Laschenhauptebene senkrecht) zu der Seitenlasche angeordnet sein.

Jede Durchgangsöffnung kann im Querschnitt kreisrund sein und die zugeordnete Funktionsausnehmung kann koaxial hierzu angeordnet sein. Die Funktionsausnehmung kann insbesondere einen polygonalen, insbesondere hexagonalen, Querschnitt aufweisen und so z.B. als Halterung für eine Standard-Sechskantmutter bzw. einen Sechskantkopf einer Schraube oder dgl. verwendet werden.

Seitenlaschen mit Durchgangslöcher und diesen zugeordneten Funktionsausnehmungen bzw. -Aussparungen nach dem zweiten Aspekt bieten eine Vielzahl Verwendungsmöglichkeiten.

Beispielsweise kann eine neuartige Anordnung zur Endbefestigung der Energieführungskette an einem Anschlusspunkt vorgesehen werden, mit an jeder endseitigen Seitenlasche einem zugeordneten Endbefestigungsteil das einen Arretierungszapfen zur Fixierung in Längsrichtung umfasst, der in die Funktionsausnehmung der zugeordneten Seitenlasche eingreift. Dabei kann das Endbefestigungsteil, eine Basisplatte aufweisen, die zur Befestigung am Anschlusspunkt ausgeführt ist und z.B. einen Quersteg übergreift.

Auch die Erweiterung des Aufnahmeraums einer Energieführungskette kann vereinfacht werden. Dazu kann an zumindest einigen Kettengliedern, jeweils an beiden Seitenlaschen je ein Erweiterungsarm seitlich angebracht werden, welcher durch eine form- und/oder kraftschlüssige Verbindung, insbesondere eine Clipverbindung, anhand der Durchgangsöffnungen und Funktionsausnehmungen mit der jeweiligen Seitenlasche verbunden ist. Solche Erweiterungsarme können am anderen Endbereich so gestaltet werden, dass diese vorzugsweise paarweise durch einen Querstege zu sog. Erweiterungsbügeln verbindbar sind. Dabei können die Querstege zu denen der Kettenglieder baugleich sind, bspw. gemäß dem o.g. ersten Aspekt.

Ferner können zwei Energieführungsketten aus Kettengliedern mit Seitenlaschen nach dem zweiten Aspekt einfacher und ohne aufwendige Spezialteile parallel aneinander befestigt werden. Dabei können zumindest einige Seitenlaschen in einem Laschenstrang der einen Energieführungskette mit Seitenlaschen in einem seitlich angrenzenden Laschenstrang der anderen Energieführungskette aneinander befestigt werden mittels Verbindern, welche jeweils durch fluchtende Durchgangsöffnungen hindurch in die Funktionsausnehmungen greifen bzw. in diesen gehalten sind.

Auch kann bspw. ohne Veränderung der Seitenlasche eine Erweiterung einer Energieführungskette mit einer externen Leitung erzielt werden - nach einem Prinzip analog zu WO 2016/146706 A1 - wobei zumindest an der Außenseite einiger Seitenlaschen eines Laschenstrangs jeweils ein Halteadapter zum Anbringen einer externen Leitung, insbesondere für einen Wellschlauchhalter, vorgesehen ist. Gemäß dem zweiten Aspekt der Erfindung kann der Halteadapter, anders als in WO 2016/146706 A1 ohne über die Seitenlaschen vorstehende Teile, mittels Verbindern befestigt werden welche durch die Durchgangsöffnungen hindurch in die Funktionsausnehmungen greifen bzw. in diesen gehalten sind.

Um bei Energieführungsketten eine besonders kostengünstig herstellbare aber stabile Endbefestigung zu erreichen, kann ein Quersteg für ein Kettenglied einer Energieführungskette zwischen seinem Mittelteil und jedem endseitigen Befestigungsabschnitt, an den jeweiligen Befestigungsabschnitt angrenzend, insbesondere tangential zu diesem oder diesen teilweise schneidend, beidseitig jeweils ein Durchgangsloch senkrecht durch den Körper des Querstegs aufweisen.

Anhand solcher Durchgangslöcher kann, ein Kettenglied mit einem Quersteg durch einfache Schraubverbindung und anhand des Querstegs selbst unmittelbar an einem Anschlusspunkt befestigt werden, z.B. anhand von Schaftschrauben zu denen die Durchgangslöcher passend dimensioniert sind.

Die Anordnung der Durchgangslöcher jeweils im Endbereich der Längserstreckung des Querstegs ermöglicht dabei einen Kraftfluss zumindest teilweise oder überwiegend durch den Körper der Seitenlasche, sodass der Quersteg trotz Befestigungsfunktion eine verhältnismäßig geringe Materialstärke aufweisen kann.

Bevorzugt ist dabei der Quersteg als einteiliger, entlang einer Längsachse erstreckter Körper aus Kunststoff, insbesondere symmetrisch zu einer Mittelebene senkrecht zur Längsachse, hergestellt. Typisch hat der Quersteg, einen plattenartigen Mittelteil und beidseitig am jedem Ende jeweils einen Befestigungsabschnitt zur Verbindung mit der Seitenlasche, wobei die Befestigungsabschnitte z.B. aber nicht zwingend gemäß dem Aspekt ausgeführt sein können, was eine besonders robuste Verbindung und gute Kraftübertragung in die Seitenlasche erlaubt.

Zur Steigerung der Biegefestigkeit des Querstegs kann dieser jeweils von jedem Befestigungsabschnitt ausgehend, insbesondere an der Außenseite, zwei Verstärkungsstreben aufweisen die, insbesondere benachbart zum Durchgangsloch, zur Mitte des plattenartigen Mittelteils hin verlaufen und einteilig mit dem Körper aus Kunststoff hergestellt sind. So lässt sich die Materialstärke des Querstegs trotz Befestigungsfunktion weiter reduzieren.

Beim sog. vollstegigen Kettentyp haben alle Kettenglieder jeweils zwei Querstege, beim halbstegigen Kettentyp hingegen nur jedes zweite Kettenglied. Hierin vorgeschlagene Aspekte der Erfindung sind auf beide Kettentypen und sowohl auf gekröpfte Seitenlaschen, als auch auf alternierend aufeinanderfolgende Innen- und Außenlaschen anwendbar. Die vorgeschlagenen Aspekte sind weiterhin grundsätzlich auch auf zweiteilige Kettenglieder anwendbar, d.h. Kettenglieder bei welchen zwei Seitenlaschen einteilig mit einem Quersteg hergestellt sind, jedoch bei vierteiligen Kettengliedern besonders vorteilhaft. Bei vierteiligen Kettengliedern, lassen sich die Seitenlaschen und die Querstege als im Wesentlichen flache Bauteile mit besonders einfachen Formwerkzeugen und in hohen Taktraten herstellen.

Weitere Einzelheiten, Merkmale und Vorteile der Erfindung ergeben sich - ohne Beschränkung des Vorstehenden - aus der nachfolgenden, ausführlichen Beschreibung von bevorzugten Ausführungsbeispielen anhand der beiliegenden Zeichnungen. Dabei zeigen:
**FIG.1A-1C****:** eine einzelne Seitenlasche bzw. Kettenlasche in Seitenansicht von der Außenseite (FIG.1A), von der Innenseite (FIG.1B) und in Draufsicht (FIG.1C);
**FIG.2A-2C****:** einen separaten Quersteg bzw. Öffnungssteg in Untersicht (FIG.2A), Seiten- bzw. Frontansicht (FIG.2B) und in Draufsicht (FIG.2C);
**FIG.3A-3C****:** Kettenglieder mit Seitenlaschen und Quersteg nach FIG.1-2, in Seitenansicht (FIG.3A) sowie im Querschnitt mit einem gelösten Quersteg (FIG.3B) und im Querschnitt eines geschlossenen Kettenglieds mit Endbefestigungsschrauben (FIG.3C) ;
**FIG.4****:** eine perspektivische Ansicht verketteter Kettenglieder mit Teildarstellung unterschiedlicher Funktionsbauteile an bzw. in den Kettengliedern mit Seitenlaschen und Querstege nach FIG.1-2; und
**FIG.5-8****:** verschiedene Funktionsbauteile aus FIG.4, nämlich ein Endbefestigungsteil (FIG.5) in Seitenansicht und Draufsicht; einen Halteadapter für einen Wellschlauchhalter (FIG.6) in unterschiedlichen Ansichten; einen Erweiterungsarm zur Aufnahmeraumerweiterung (FIG.7) in Front- und Seitenansicht und einen Clips-Steckverbinder zur Kopplung von Laschensträngen (FIG.8) ) in unterschiedlichen Ansichten.

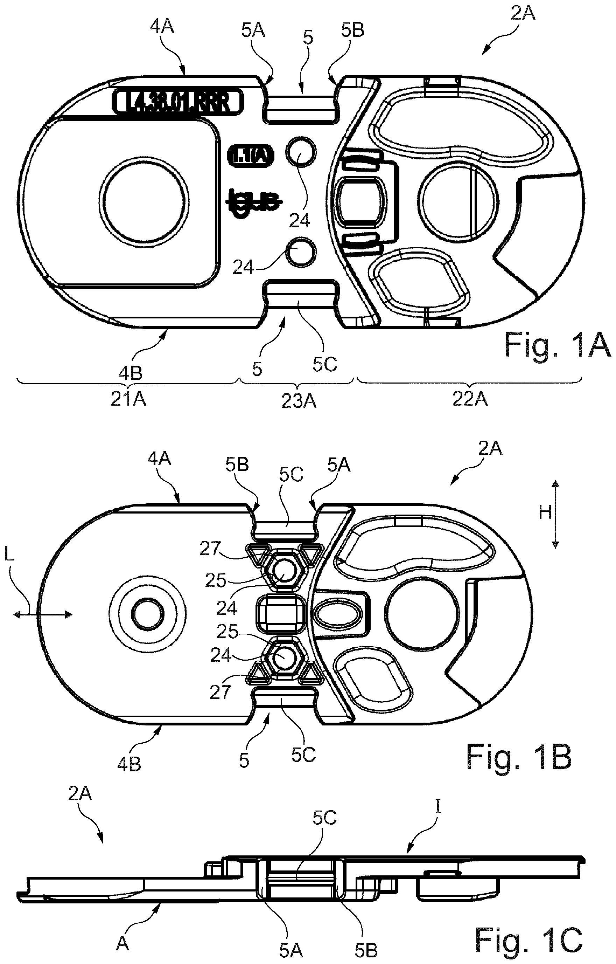

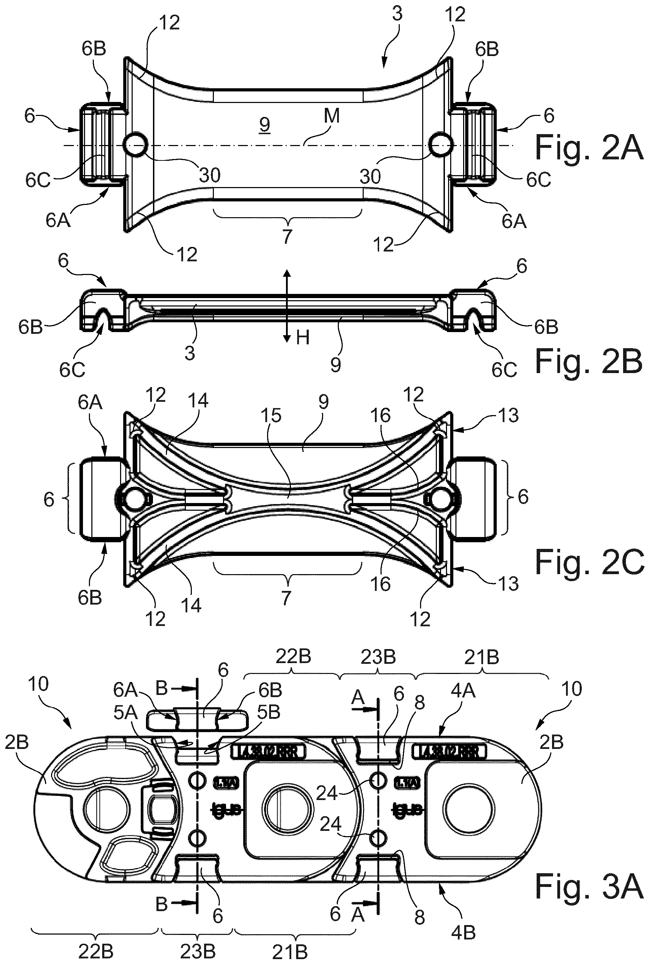

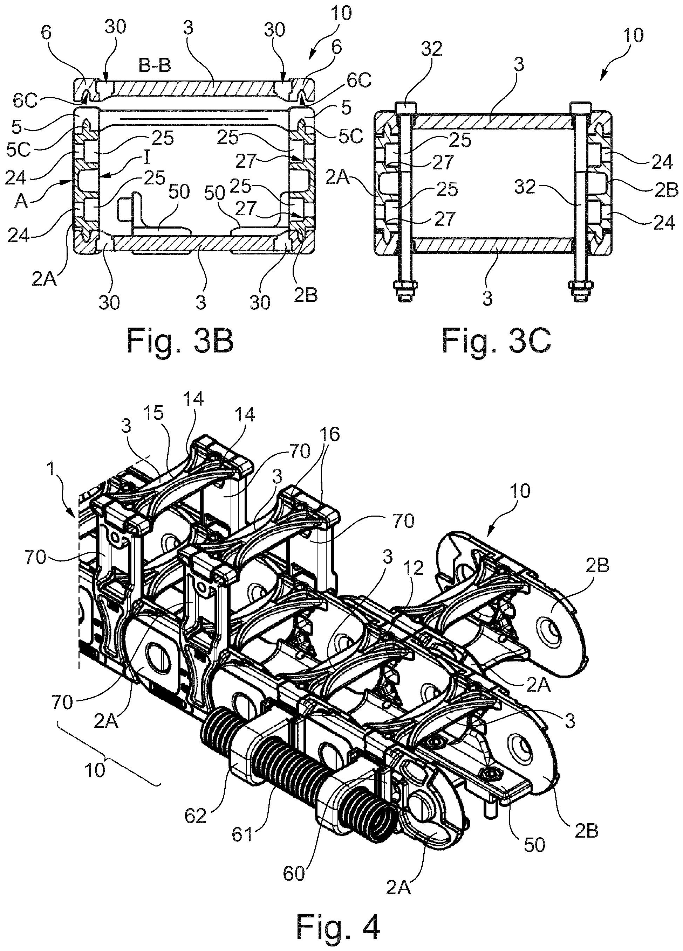

FIG.1A-FIG.3C zeigen den Aufbau eines vierteiligen Kettenglieds 10 einer Energieführungskette 1 (FIG.4) zur dynamischen Führung von Schläuchen, Kabeln oder dergleichen (nicht gezeigt) zwischen zwei Anschlussstellen. Das Kettenglied 10 ist im Querschnitt, wie FIG.3B z.B. nach Schnittlinie B-B aus FIG.3A zeigt, rechteckig bzw. kastenförmig und umgibt einen Aufnahmeraum für geführte Leitungen. Hierzu ist das Kettenglied 10 aus zwei separaten, spiegelsymmetrisch gestalteten Seitenlaschen 2A, 2B und jeweils zwei identischen, separaten Querstegen 3 zusammengesetzt (FIG.3C). Die Seitenlaschen 2A, 2B und Querstege 3 sind einteilig aus spritgussfähigem Kunststoff, z.B. einem Polymer ggf. mit Verstärkungsfasern, hergestellt.

Zur Befestigung eines Querstegs 3 hat jede Seitenlasche 3A, 3B jeweils an beiden Schmalseiten 4A, 4B eine randseitig im Laschenkörper vertiefte Klemmaufnahme 5, mit zwei in der Längsrichtung L gegenüberliegende Klemmflächen 5A, 5B, die durch den Laschenkörper der Seitenlasche 3A, 3B gebildet sind. Zwischen den Klemmflächen 5A, 5B wird ein komplementär geformter Befestigungsabschnitt 6 des zugeordneten Querstegs 3 an der jeweiligen Schmalseite 4A, 4B eingeklemmt, vgl. FIG.3A, Schnittlinien A-A und B-B. Der Befestigungsabschnitt 6 hat dabei ggf. leichtes Übermaß und wird in die jeweilige Klemmaufnahme 5 unter Kraftaufwand eingedrückt bzw. eingepresst, vorzugsweise werkzeugfrei.

Jeder der beiden Befestigungsabschnitte 6 an den gegenüberliegenden Längsenden eines Querstegs 3 hat hier zwei in Längsrichtung L weisende bzw. zur Längsachse M des Querstegs 3 etwa parallel verlaufende Gegenklemmflächen 6A, 6B, die als Gegenstück bzw. komplementär zu den Klemmflächen 5A, 5B gestaltet sind.

Wie aus FIG.1A-3C ersichtlich sind alle Klemmaufnahmen 5 an den Schmalseiten 4A, 4B einer Seitenlasche 2A, 2B jeweils identisch geformt und in Längsrichtung L mittig angeordnet. Die Klemmaufnahmen 5 sind zudem symmetrisch zur Mittelebene parallel zur Laschenhöhe H (senkrecht zur Längsrichtung L) ausgeführt. Dementsprechend sind auch beide Befestigungsabschnitte 6 eines Querstegs 3 identisch und jeweils zur Längsmittelebene des Querstegs 3 (enthält die Mittelachse M) symmetrisch. Der Quersteg 3 ist insgesamt ist zu seiner Querebene (senkrecht zur Mittelachse M) und zu seiner Längsebene symmetrisch ausgeführt. Wie FIG.2A-2C näher zeigen ist jeder Befestigungsabschnitt 6 zwischen seinen Gegenklemmflächen 6A, 6B überwiegend aus Vollmaterial hergestellt, und weist hier einen zusammenhängenden und senkrecht zur Längsachse M durchgehenden Bereich aus Vollmaterial auf. Die Materialdicke des Befestigungsabschnitts 6 in Richtung der Mittelachse M (bzw. senkrecht zur Laschenhauptebene) ist, wie FIG.3B näher zeigt, im Wesentlichen gleich der Materialdicke der Seitenlasche 2A, 2B im Bereich des Laschenkörpers unmittelbar um die Klemmaufnahme 5, sodass der Befestigungsabschnitt 6 bündig mit der Außenseite A und der Innenseite I der Seitenlaschen 2A, 2B endet. Ferner weist der Befestigungsabschnitt 6 in Höhenrichtung H (Ebene der FIG.1B/2B) eine verglichen zum plattenartigen mittleren Bereich 7 des Querstegs 3 größere Materialstärke aufweist.

FIG.1A-1C zeigen die Geometrie der Klemmflächen 5A, 5B, hier mit einem überwiegenden konvexen bzw. ausgebauchten Flächenbereich der in Höhenrichtung H zur Schmalseite 4A, 4B aufweitet, um das Einfügen eines Befestigungsabschnitts 6 zu erleichtern. Die Klemmflächen 5A, 5B sind hier näherungsweise einem Achtelkreisbogen oder einer Tangensfunktion in Seitenansicht (FIG.1A-1B) entsprechend gestaltet, auch andere Verläufe sind möglich. Die Klemmflächen 5A, 5B verlaufen im gezeigten Beispiel im geometrischen Sinne zylindrisch mit Hüllkurven senkrecht zur Laschenhauptebene, wie FIG.1C zeigt, auch ein Aufweiten zur Außenseite A ist möglich. Die Gegenklemmflächen 6A, 6B sind zumindest mit einem korrespondierenden konkaven Flächenbereich ausgeführt. Die konvexen und konkaven Flächenbereiche der Klemmflächen 5A, 5B und der Gegenklemmflächen 6A, 6B sind zumindest im Querschnitt der Aufnahme 5 bzw. des Befestigungsabschnitts 6 senkrecht zur Mittelachse M, d.h. in der Laschenhauptebene (Ebene parallel zu FIG.1A/1B) gerundet ausgeführt, was auch Kerbspannungen vermeidet. Im unteren Bereich der Ausnehmung 5 können die Klemmflächen 5A, 5B zur Laschenmitte hin über einen Wendepunkt in einen kleinen Flächenanteil, der konkav ausgeführt ist, übergehen um eine zusätzliche Rastfunktion mit einem entsprechenden Teilbereich der Gegenklemmflächen 6A, 6B zu erzielen. Die Tiefe jeder Ausnehmung 5 ist etwas grösser als die Materialstärke der Befestigungsabschnitte 6 in Höhenrichtung, sodass bei eingesetzten Querstegen 3 ein schmaler Einführspalt 8 an der Außenseite A der Seitenlaschen 2A, 2B verbleibt, welcher das Aushebeln des kraftschlüssig fest eingepressten Querstegs, z.B. anhand eines Schraubenziehers erlaubt.

Wie FIG.2A-2C weiter zeigen hat der Quersteg 3 einen plattenartigen Mittelteil 7 mit einer verhältnismäßig dünnen Grundplatte 9. In beiden Endbereich hat der Quersteg 3 an jeden Befestigungsabschnitt 6 anschließend und beidseitig gegenüber dem Mittelteil 7 jeweils zwei flügelartige Stützvorsprünge 12. Die Stützvorsprünge 12 stehen von der Grundplatte 9 senkrecht zur Längsachse M in Längsrichtung L vor und auch zum Innenraum bzw. Laschenmitte hin. Stützvorsprünge 12 bilden jeweils eine Stützfläche 13 senkrecht zur Längsachse M zur Anlage an der Innenseite I der Seitenlasche 2A, 2B zur verwindungssteigen Verbindung mit dieser und auch zum geringfügigen Überlappen des Endbereichs der angrenzenden Seitenlasche (FIG.4) als Quersicherung. Zur Materialeinsparung hat der Quersteg 3 an seiner dem Inneren des Kettenglieds 10 abgewandten Seite mehrere Verstärkungsstreben. Äußere Verstärkungsstreben 14 gehen von jedem Stützvorsprung 12 aus und verlaufen gekrümmt zu einer gemeinsamen mittleren Verstärkungsstrebe 15 mittig im Mittelteil 7. Innere Verstärkungsstreben 16 gehen gekrümmt vom Randbereich der Befestigungsabschnitte 6 ebenfalls in die mittlere Verstärkungsstrebe 15 über. Die Verstärkungsstreben 14, 15, 16 sind, wie die Befestigungsabschnitte 6, einteilig mit der Grundplatte 9 hergestellt. Die Verstärkungsstreben 14, 15, 16 erlauben es die Grundplatte 9 in geringer Wandstärke auszuführen, d.h. u.a. das Kettengewicht zu reduzieren.

Wie am besten aus FIG.1A-1C und FIG.3B-3C ersichtlich, hat jede Klemmaufnahme 5 einen in der Längsrichtung L verlaufenden Querverriegelungsvorsprung 5C, welcher mit einer unterseitigen komplementären längliche Querverriegelungsnut 6C am Befestigungsabschnitt 6 den Quersteg 3 gegen Verschiebung in Richtung der Längsachse M sichert. Im hier gezeigten Ausführungsbeispiel geht der Querverriegelungsvorsprung 5C zwischen den Klemmflächen 5A, 5B vollständig durch und die Querverriegelungsnut 6C entsprechend vollständig bis zu den Gegenklemmflächen 6A, 6B durch. Bei ausreichender Baulänge in Längsrichtung L wird zudem eine zusätzliche Versteifung gegen Schwenken des Befestigungsabschnitts 6 um die Höhenachse der Seitenlasche 2A, 2B erzielt. Wie FIG.3B zeigt, sind der Querverriegelungsvorsprung 5C und die Querverriegelungsnut 6C von der Laschenmitte weg verjüngend bzw. zuspitzend ausgeführt, was eine Zentrierung erzielt und weniger enge Herstellungstoleranzen erfordert.

Die Klemmaufnahmen 5 der Seitenlaschen 2A, 2B und entsprechende Befestigungsabschnitte 6 des bzw. der Querstege 3 ermöglichen eine robuste, verwindungssteife Befestigung zwischen den Querstegen 3 und den Seitenlaschen 2A, 2B und erlauben zugleich aufgrund der relativ einfachen Geometrie eine Vereinfachung der SpritzgussWerkzeuge im Vergleich zu Verbindungslösungen aus dem Stand der Technik.

Die Seitenlaschen 2A, 2B haben jeweils zwei Überlappungsbereiche 21A, 22A bzw. 21B, 22B mit einem darin einteilig vorstehenden Schenkbolzen oder einer darin geformten Aufnahme. Diese dienen in bekannter Weise zur gelenkigen Verbindung mit einem entsprechenden Überlappungsbereich 22A, 21A bzw. 22B, 21B einer jeweils in Längsrichtung angrenzenden, hier baugleichen Seitenlasche 2A bzw. 2B, wie z.B. aus FIG.3A ersichtlich. Zwischen den Überlappungsbereichen 21A, 22A bzw. 21B, 22B haben die Seitenlaschen 2A, 2B jeweils einen mittleren Bereich der gegenüber den Überlappungsbereichen zum Teil größere Wandstärke aufweist.

Im dargestellten Beispiel hat jede Seitenlasche 2A, 2B im Laschenkörper zwei identische Durchgangsöffnungen 24, hier kreiszylindrische Durchbrechungen, von der Außenseite zur Innenseite, welche im mittleren Bereich 23A bzw. 23B und zwischen den Befestigungsbereichen bzw. Klemmaufnahmen 5 vorgesehen sind. Die Durchgangsöffnungen 24 liegen mittig auf der Höhenmittelebene, vgl. A-A in FIG.3A, der Seitenlasche 2A bzw. 2B und sind symmetrisch zur Längsmittelebene bzw. in identischem Abstand zu den Schmalseiten 4A, 4B angeordnet.

Im dargestellten Beispiel hat jede Durchgangsöffnung 24 jeweils eine koaxial zugeordnete Funktionsausnehmung 25 im Laschenkörper der Seitenlasche 2A bzw. 2B. Jede Funktionsausnehmung 25 mündet dabei nach Außen in die Durchgangsöffnung 24 bzw. umgekehrt, wie in FIG.3A-3B zu sehen. Wie am besten aus FIG.1B ersichtlich hat die Funktionsausnehmung 25 einen gegenüber der Durchgangsöffnung 24 vergrößerten Durchmesser und ist an der Innenseite I vorgesehen.

Anders als die im Querschnitt kreisrunden Durchgangsöffnungen 24 sind die Funktionsausnehmungen 25 mit einem hexagonalen Querschnitt ausgeführt, wie in FIG.1B gezeigt, um einen Formschluss mit zusammenwirkenden Bauteilen wie z.B. Sechskant-Verbindern zu ermöglichen. Die vergrößerte Funktionsausnehmung 25 bildet zudem als Bodenfläche, die die Durchgangsöffnung 24 umrandet eine Stützfläche 27 im Körper der Seitenlasche 2A, 2B an welchem Rastverbindungen, Clips-Steckverbinder oder dgl. angreifen bzw. die Durchgangsöffnung 24 hinter greifen können, wie unten beispielhaft erläutert. Die Funktionsausnehmung 25 erweitert die Funktionalität der Seitenlasche 2A; 2B bzw. ermöglicht ein modulares Baukastensystem für besondere Anwendungen der Energieführungskette 1.

In FIG.3B und FIG.4 beispielhaft gezeigt ist eine Anordnung zur Endbefestigung wobei an jeder Seitenlasche 2A, 2B ein zugeordnetes Endbefestigungsteil 50 vorgesehen ist. Das Endbefestigungsteil 50 ist als einteiliges Kunststoffteil hergestellt und hat eine Basisplatte 51, die zur Schraubverbindung mit einem Anschlusspunkt mit endseitigen Sechskantausnahmen ausgeführt ist. Die Basisplatte 51 hat eine untere Aussparung 52 mit dem diese einen Quersteg 3 übergreift, vgl. FIG.3B. An einem in Höhenrichtung H vorragenden mittleren Bereich ist ein Arretierungszapfen 53, in Form eines Sechskants, zur Fixierung in Längsrichtung vorgesehen, der im montierten Zustand (FIG.3B rechts) in die Funktionsausnehmung 25 der zugeordneten Seitenlasche 2A bzw. 2B eingreift.

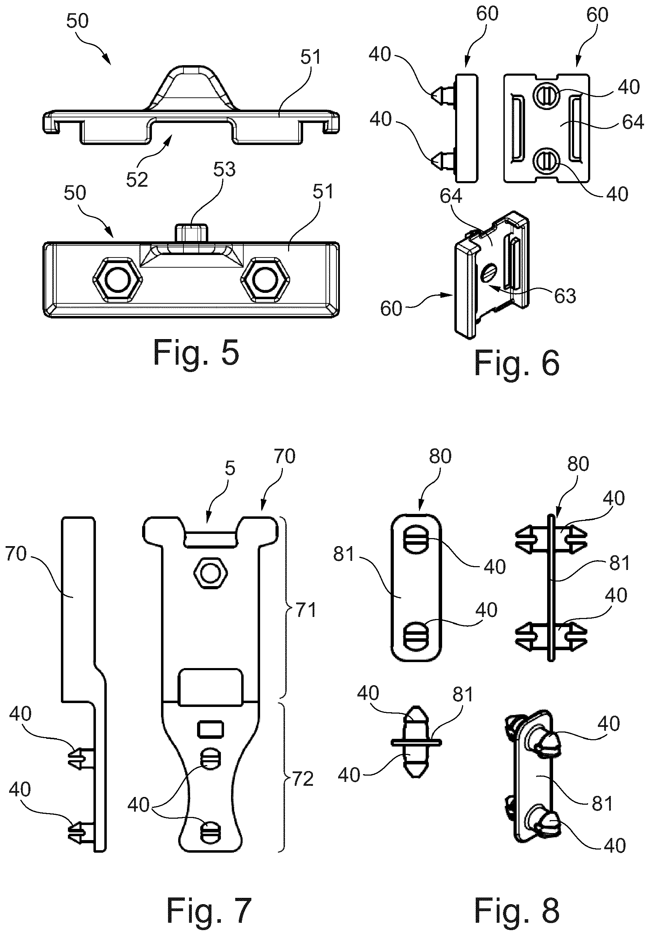

FIG.4 (unten) zeigt in Verbindung mit FIG.6, nur beispielhaft in einem Teilabschnitt der Energieführungskette 1, eine Anordnung zur Erweiterung der Energieführungskette 1 mit einer externen Leitung, die in einem Wellschlauch 61 geführt ist. Der Wellschlauch 61 wird mittels Wellschlauchhaltern 62, z.B. handelsüblicher Bauart, an den Außenseiten jeder n-ten Seitenlasche 2A bzw. 2B befestigt. Hierzu zeigt FIG.6 einen speziellen Halteadapter 60, mit einer Aufnahme 63 zum Aufnehmen eines Wellschlauchhalters 62. An der Rückseite der Grundplatte 64 sind Clips-Steckverbinder 40 vorgesehen, mit einem Schaft passend zu den Durchgangsöffnungen 24 und Rasthaken für die Funktionsausnehmungen 25 vorgesehen. Die Clips-Steckverbinder 40 greifen Durchgangsöffnungen 24 hindurch in die Funktionsausnehmungen 25, und die Stützfläche 27 hinter greifen bzw. daran gehalten sind.

FIG.4 zeigt ferner, nur beispielhaft in einem Teilabschnitt der Energieführungskette 1, eine Anordnung zur Erweiterung des Aufnahmeraums durch mehrteilige Erweiterungsbügel. Dabei ist an zumindest einigen Kettengliedern 10, jeweils an der Außenseite A und an beiden Seitenlaschen 2A, 2B ein Erweiterungsarm 70, vgl. FIG.7, angebracht. Der Erweiterungsarm 70 hat einen oberen Teil 71 mit einer oberseitigen Klemmaufnahme 5, identisch zur der oben für die Seitenlaschen 2A, 2B beschriebenen Klemmaufnahme 5. Somit kann das obere Ende von zwei Erweiterungsarmen 70 anhand eines Querstegs 3 verbunden werden, um einen Erweiterungsbügel zu einer Seite der Kettenlasche 10 zu bilden (FIG.4 links oben), in welchem weitere Leitungen oder z.B. ein Schlauch mit größerem Durchmesser geführt werden kann. Der nach außen gekröpfte untere Teil 72 des Erweiterungsarms 70 hat zwei nach innen gerichtete, Clips-Steckverbinder 40, welche form- und/oder kraftschlüssig Verbindung, in die Funktionsausnehmungen 25 der jeweiligen Seitenlasche 2A, 2B eingreifen und die Stützfläche 27 hinter greifen. Der Erweiterungsarm 70 ist einstückig mit den Clips-Steckverbinder n 40 in Kunststoff gefertigt.

FIG.4 (rechts) zeigt in Verbindung mit FIG.8, nur beispielhaft an einem Kettenglied 10, eine Anordnung zur Erweiterung der Energieführungskette 1 durch parallele Verbindung mit einer weiteren Energieführungskette 1. Hierzu können die Seitenlaschen 2A; 2B in seitlich aneinander grenzenden Laschenstränge anhand der Durchgangsöffnungen 24 mit Funktionsausnehmungen 25, analog zu FIG.5-6 mit geringem Montageaufwand, aneinander befestigt werden. Dazu zeigt FIG.8 spezielle doppelseitige Kettenlaschenverbinder 80 mit einer Grundplatte 81 an welcher beidseitig Clips-Steckverbinder 40, wie zu FIG.6-7 beschrieben vorgesehen sind. Mit derartigen Kettenlaschenverbindern 80 können zwei oder mehr Energieführungsketten 1 besonders leicht parallel aneinander befestigt werden, z.B. um eine größere Anzahl an Leitungen zu führen. Dabei nutzen die Kettenlaschenverbinder 80 ebenfalls, hier jeweils beidseitig zwei Durchgangsöffnungen 24 mit Funktionsausnehmungen 25 zur Befestigung.

Im in FIG.3B-3C und FIG.2A-2C dargestellten Beispiel haben die Querstege 3 zwischen dem Mittelteil 7 und jedem Befestigungsabschnitt 6 jeweils ein Durchgangsloch 30. Das Durchgangsloch 30 ist dabei an den jeweiligen Befestigungsabschnitt 6 angrenzend, in FIG.3B-3C diesen geringfügig schneidend angeordnet. Das Durchgangsloch 30 geht senkrecht durch den Körper des Querstegs 3, sodass ein Kettenglied 10 mit beidseitig je nur einer Befestigungsschraube 32 durch den Quersteg 3 an einem Anschlusspunkt befestigbar ist. Der Kopf der Befestigungsschraube 32 kann dabei zumindest teilweise auf dem Befestigungsabschnitt 6 abstützen (FIG.3C) sodass die Spann- bzw. Klemmkraft auf und durch die Seitenlasche 2A, 2B übertragen wird. Zur bessren Stabilität hat der Quersteg 3 jeweils vom Befestigungsabschnitt 6 ausgehend, die inneren Verstärkungsstreben 16, welche benachbart zum Durchgangsloch 30, zum Mittelteil 7 hin verlaufen in die mittlere Verstärkungsstrebe 15 übergehen. Der Kopf der Befestigungsschraube 32 kann auch z.T. auf den Verstärkungsstreben 16 abstützen.

### Bezugszeichenliste

1 Energieführungskette
2A; 2B Seitenlaschen
3 Quersteg
4A, 4B Schmalseiten (Seitenlasche)
5 Klemmaufnahme
5A, 5B Klemmfläche
5C Querverriegelungsvorsprung
6 Befestigungsabschnitt (Quersteg)
6A, 6B Gegenklemmflächen
6C Querverriegelungsnut
7 mittlerer Bereich
8 Einführspalt
9 Grundplatte
10 Kettenglied
12 Stützvorsprung
13 Stützfläche
14, 15, 16 Verstärkungsstrebe
21A, 22A; 21B, 22B Überlappungsbereich
23A; 23B mittlerer Bereich
24 Durchgangsöffnung
25 Funktionsausnehmung
30 Durchgangsloch (für Befestigungsschraube)
32 Befestigungsschraube
40 Clips-Steckverbinder
50 Endbefestigungsteil
51 Basisplatte
52 Aussparung
53 Arretierungszapfen
60 Halteadapter
61 Wellschlauch
62 Wellschlauchhalter
63 Aufnahme (für Wellschlauchhalter)
64 Grundplatte
70 Erweiterungsarm
71 oberer Teil
72 unterer Teil
80 Kettenlaschenverbinder
81 Grundplatte
A Außenseite
I Innenseite
L Längsrichtung
H Höhenrichtung

## Patentansprüche

1. Kettenglied einer Energieführungskette (1) zur Führung von Leitungen, wie Schläuchen, Kabeln oder dergleichen, zwischen zwei Anschlussstellen von denen mindestens eine relativbeweglich ist, wobei das Kettenglied (10) aus mehreren Einzelteilen (2A, 2B, 3) zusammengesetzt ist, mit zwei Seitenlaschen (2A, 2B), jeweils mit einem Laschenkörper aus Kunststoff mit einer Innenseite (I) zum Inneren des Kettenglieds, einer davon abgewandten Außenseite (A) und zwei im Wesentlichen parallel zur Längsrichtung verlaufenden Schmalseiten (4A, 4B), sowie mindestens einem separaten Quersteg (3), insbesondere zwei gegenüberliegenden separaten Querstegen (3), zur lösbaren Verbindung der Seitenlaschen, wobei der mindestens eine Quersteg (3) einen Mittelteil (7) und beidseitig an jedem Ende einen Befestigungsabschnitt (6) umfasst,
wobei die Seitenlaschen jeweils an mindestens einer, insbesondere an beiden Schmalseiten einen entsprechenden Befestigungsbereich aufweisen, welcher mit einem Befestigungsabschnitt eines Querstegs kraftschlüssig, insbesondere kraft- und formschlüssig, zusammenwirkt,
wobei jeder Befestigungsbereich einer Seitenlasche (2A, 2B) eine Klemmaufnahme (5) im Laschenkörper umfasst, welche zwei in der Längsrichtung (L) gegenüberliegende Klemmflächen (5A, 5B) des Laschenkörpers aufweist, zwischen denen ein komplementär geformter Befestigungsabschnitt (6) des mindestens einen separaten Querstegs (3) durch Klemmkraft eingeklemmt ist;
der mindestens eine Quersteg (3) einteilig aus Kunststoff hergestellt ist und im Endbereich an jeden Befestigungsabschnitt (6) anschließend und beidseitig gegenüber dem Mittelteil (7) vorstehend zwei Stützvorsprünge (12) mit jeweils einer Stützfläche (13) zur Anlage an der Innenseite der Seitenlasche (2A, 2B) aufweist.

2. Kettenglied nach Anspruch 1, **dadurch gekennzeichnet, dass** jeder der beiden Befestigungsabschnitte (6) eines Querstegs (3) zwei in Längsrichtung weisende Gegenklemmflächen (6A, 6B) umfasst, die komplementär zu den Klemmflächen (5A, 5B) gestaltet sind, und jeder der beiden Befestigungsabschnitte (6) einen zwischen diesen Gegenklemmflächen (6A, 6B) durchgehenden Vollmaterialbereich umfasst.

3. Kettenglied nach Anspruch 2, **dadurch gekennzeichnet, dass** der Vollmaterialbereich der Befestigungsabschnitte (6) eine Materialdicke in Richtung der Längsachse (M) des Querstegs (3) im Wesentlichen gleich der Materialdicke der Seitenlasche (2A, 2B) um die Klemmaufnahme (5) aufweist und/oder in Höhenrichtung (H) eine gegenüber einem plattenartigen mittleren Bereich (7) des Querstegs größere Materialstärke aufweist.

4. Kettenglied nach Anspruch 1, 2 oder 3, **dadurch gekennzeichnet, dass** jede Klemmaufnahme (5) (6) einen länglichen und in der Längsrichtung erstreckten Querverriegelungsvorsprung (5C) aufweist und entsprechend jeder Befestigungsabschnitt (6) eine komplementäre längliche Querverriegelungsnut (6C) aufweist, welche gegen Verschiebung senkrecht zur Laschenhauptebene halten und insbesondere die Stützflächen (13) der Stützvorsprünge (12) jeweils in Anlage an der Innenseite der Seitenlasche (2A, 2B) halten.

5. Kettenglied nach Anspruch 4, **dadurch gekennzeichnet, dass** der Querverriegelungsvorsprung (5C) und die Querverriegelungsnut (6C) in der Längsrichtung über zumindest einen überwiegenden Teil des Abstands zwischen den Klemmflächen (5A, 5B) bzw. Gegenklemmflächen (6A, 6B) erstreckt sind und/oder sich in Richtung der Laschenhauptebene verjüngen bzw. zuspitzen.

6. Kettenglied nach einem der Ansprüche 1 bis 5, **dadurch gekennzeichnet, dass** die beiden Klemmaufnahmen (5) an den Schmalseiten (4A, 4B) einer Seitenlasche (2A, 2B) identisch geformt sind, insbesondere mittig und symmetrisch zur Laschenhöhenmittelebene (A-A), wobei beide Klemmflächen (5A, 5B) jeweils zumindest einen konvexen und/oder konkaven Flächenbereich aufweisen.

7. Kettenglied nach Anspruch 6, **dadurch gekennzeichnet, dass** jede Klemmfläche (5A, 5B) einen konvexen Flächenbereich aufweist, welcher vorzugsweise einen überwiegenden Flächenanteil der Klemmfläche darstellt und zur Schmalseite (4A, 4B) aufweitet, und dass die Gegenklemmflächen (6A, 6B) mit zumindest einem korrespondierenden konkaven Flächenbereich ausgeführt sind, wobei zumindest die Flächenbereiche (5A, 5B; 6A, 6B) vorzugsweise im Querschnitt gerundet ausgeführt sind.

8. Kettenglied nach einem der Ansprüche 1 bis 7 **dadurch gekennzeichnet, dass** jede Klemmaufnahme (5)
- in Form einer beidseitig zur Innenseite (I) und zur Außenseite (A) der Seitenlasche (2A, 2B) mündenden Randausnehmung an der Schmalseite (4A, 4B) ausgeführt ist; und/oder
- als zumindest teilweise zwischen Innenseite (I) und Außenseite (A) durchgehenden Randausnehmung integral im Laschenkörper ausgeführt ist.

9. Kettenglied nach einem der Ansprüche 1 bis 8 **dadurch gekennzeichnet, dass** das Kettenglied zwei Seitenlaschen (2A, 2B) und zwei gegenüberliegende, separate Querstegen (3), zur lösbaren Verbindung der Seitenlaschen (2A, 2B) miteinander umfasst, und dass jede Seitenlasche (2A, 2B) und jeder Quersteg (3) als einteiliger Körper aus Kunststoff, insbesondere als hinterschneidungsfreies Spritzgussteil, hergestellt ist.

10. **Quersteg** (3) für ein Kettenglied (10) einer Energieführungskette nach einem der Ansprüche 1 bis 9, wobei der Quersteg (3) als einteiliger, entlang einer Längsachse (M) erstreckter Körper aus Kunststoff, insbesondere symmetrisch zu einer Mittelebene senkrecht zur Längsachse, hergestellt ist, mit einem plattenartigen Mittelteil (7) und mit beidseitig an jedem Ende jeweils einem Befestigungsabschnitt (6) zur Verbindung mit einer Seitenlasche,
- wobei jeder der beiden Befestigungsabschnitte (6) zwei in Richtung senkrecht zur Längsachse des Querstegs weisende voneinander abgewandte Gegenklemmflächen (6A, 6B) umfasst, zur kraftschlüssigen Zusammenwirkung mit komplementären Klemmflächen (5A, 5B) einer Seitenlasche (2A, 2B), und einen zwischen diesen Gegenklemmflächen durchgehenden Vollmaterialbereich umfasst; und
- wobei der Quersteg im Endbereich an jeden Befestigungsabschnitt (6) anschließend und beidseitig gegenüber dem Mittelteil (7) vorstehend zwei Stützvorsprünge (12) mit jeweils einer Stützfläche (13) zur Anlage an der Innenseite der Seitenlasche (2A, 2B) aufweist.

11. Quersteg nach Anspruch 10, **dadurch gekennzeichnet, dass** zwischen dem Mittelteil (7) und jedem Befestigungsabschnitt (6), an den jeweiligen Befestigungsabschnitt angrenzend, beidseitig jeweils ein Durchgangsloch (30) senkrecht durch den Quersteg (3) vorgesehen ist, sodass ein Kettenglied durch Schraubverbindung (32) anhand des Querstegs an einem Anschlusspunkt befestigbar ist.

12. Quersteg nach Anspruch 10 oder 11, **dadurch gekennzeichnet,**
**dass** der Quersteg jeweils von jedem Befestigungsabschnitt ausgehend, insbesondere an der Außenseite, zwei Verstärkungsstreben aufweist, die, insbesondere benachbart zum Durchgangsloch, zur Mitte des plattenartigen Mittelteils hin verlaufen und einteilig mit dem Körper aus Kunststoff hergestellt sind.

13. Quersteg nach Anspruch 10, 11 oder 12, **dadurch gekennzeichnet, dass** der Quersteg (3) einen plattenartigen Mittelteil (7) aufweist und von jedem Stützvorsprung (12) ausgehend eine Verstärkungsstrebe (14) aufweist, welche zum plattenartigen Mittelteil (7) verläuft.

## Claims

1. A chain link of an energy guiding chain (1) for guiding lines, such as hoses, cables or the like, between two connection points of which at least one is relatively movable, the chain link (10) being composed of several individual parts (2A, 2B, 3), comprising two side plates (2A, 2B), each comprising a plate body made of plastic comprising an interior side (I) facing the interior of the chain link, an exterior side (A) facing away therefrom and two narrow sides (4A, 4B) running substantially parallel to the longitudinal direction, and at least one separate transverse connecting piece (3), in particular two separate transverse connecting pieces (3) opposite one another, for the detachable connection of the side plates, the at least one transverse connecting piece (3) comprising a center part (7) and a fastening portion (6) on both sides at each end,
the side plates each comprising a corresponding fastening region on at least one, in particular on both narrow sides, which interacts by frictional connection, in particular by frictional connection and by form-fit, with a fastening portion of a transverse connecting piece,
each fastening region of a side plate (2A, 2B) comprises a clamping seat (5) in the plate body, which has two clamping surfaces (5A, 5B) of the plate body opposite one another in the longitudinal direction (L), between which a complementarily shaped fastening portion (6) of the at least one separate transverse connecting piece (3) is clamped through a clamping force;
the at least one transverse connecting piece (3) is produced in one piece from plastic and has, in the end region adjacent each fastening portion (6) and protruding on both sides opposite the center part (7), two support protrusions (12) each having a support surface (13) for resting against the interior side of the side plate (2A, 2B) .

2. The chain link according to claim 1, **characterized in that** each of the two fastening portions (6) of a transverse connecting piece (3) comprises two counter-clamping surfaces (6A, 6B) facing in the longitudinal direction, which are designed complementary to the clamping surfaces (5A, 5B), and each of the two fastening portions (6) comprises a solid material region continuous between these counter-clamping surfaces (6A, 6B).

3. The chain link according to claim 2, **characterized in that** the solid material region of the fastening portions (6) has a material thickness in the direction of the longitudinal axis (M) of the transverse connecting piece (3) substantially equal to the material thickness of the side plate (2A, 2B) around the clamping seat (5) and/or has a greater material thickness in the height direction (H) compared to a plate-like central region (7) of the transverse connecting piece.

4. The chain link according to claim 1, 2 or 3, **characterized in that** each clamping seat (5) has an elongated transverse locking protrusion (5C) extending in the longitudinal direction and, correspondingly, each fastening portion (6) has a complementary elongated transverse locking groove (6C) which hold against displacement perpendicular to the main plane of the plate and in particular hold the support surfaces (13) of the support protrusions (12) in contact with the interior side of the side plate (2A, 2B).

5. The chain link according to claim 4, **characterized in that** the transverse locking protrusion (5C) and the transverse locking groove (6C) extend in the longitudinal direction over at least a predominant part of the distance between the clamping surfaces (5A, 5B) or counter-clamping surfaces (6A, 6B) and/or taper or come to a point in the direction of the main plane of the plate.

6. The chain link according to any one of claims 1 to 5, **characterized in that** the two clamping seats (5) on the narrow sides (4A, 4B) of a side plate (2A, 2B) are shaped identically, in particular centrally and symmetrically to the plate height center plane (A-A), wherein both clamping surfaces (5A, 5B) each have at least one convex and/or concave surface region.

7. The chain link according to claim 6, **characterized in that** each clamping surface (5A, 5B) has a convex surface region, which preferably represents a predominant surface portion of the clamping surface and widens towards the narrow side (4A, 4B), and that the counter-clamping surfaces (6A, 6B) are designed with at least one corresponding concave surface region, wherein at least the surface regions (5A, 5B; 6A, 6B) are preferably designed rounded in cross-section.

8. The chain link according to any one of claims 1 to 7, **characterized in that** each clamping seat (5)
- is designed in the form of an edge recess opening on both sides to the interior side (I) and to the exterior side (A) of the side plate (2A, 2B) on the narrow side (4A, 4B); and/or
- is designed as an edge recess continuous at least partially between the interior side (I) and exterior side (A) integrally in the plate body.

9. The chain link according to any one of claims 1 to 8, **characterized in that** the chain link comprises two side plates (2A, 2B) and two separate transverse connecting pieces (3) opposite one another for detachably connecting the side plates (2A, 2B) to one another, and that each side plate (2A, 2B) and each transverse connecting piece (3) is produced as a one-piece body made of plastic, in particular as an injection-molded part without undercuts.

10. A **transverse connecting piece** (3) for a chain link (10) of an energy guiding chain according to any one of claims 1 to 9, the transverse connecting piece (3) being produced as a one-piece body made of plastic extending along a longitudinal axis (M), in particular symmetrically to a center plane perpendicular to the longitudinal axis, having a plate-like center part (7) and having a fastening portion (6) on both sides at each end for connection to a side plate, wherein
- each of the two fastening portions (6) comprises two counter-clamping surfaces (6A, 6B) facing away from one another and facing in the direction perpendicular to the longitudinal axis of the transverse connecting piece, for interaction by frictional connection with complementary clamping surfaces (5A, 5B) of a side plate (2A, 2B), and comprises a continuous solid material region between these counter-clamping surfaces;
and
- wherein the transverse connecting piece in the end region adjacent each fastening portion (6) and protruding on both sides opposite the center part (7) has two support protrusions (12), each with a support surface (13) for resting against the interior side of the side plate (2A, 2B).

11. The transverse connecting piece according to claim 10, **characterized in that** between the center part (7) and each fastening portion (6), adjacent to the respective fastening portion, a through-hole (30) is provided on both sides perpendicularly through the transverse connecting piece (3), so that a chain link can be fastened to a connection point by screw connection (32) by means of the transverse connecting piece.

12. The transverse connecting piece according to claim 10 or 11, **characterized in that** the transverse connecting piece has two reinforcing struts starting from each fastening portion, in particular on the exterior side, which, in particular adjacent to the through-hole, run towards the center of the plate-like center part and are produced from plastic in one piece with the body.

13. The transverse connecting piece according to claim 10, 11 or 12, **characterized in that** the transverse connecting piece (3) has a plate-like center part (7) and, starting from each support protrusion (12), has a reinforcing strut (14) which runs to the plate-like center part (7).

## Revendications

1. Maillon de chaîne d'une chaîne porte-câbles (1) pour le guidage de conduites, telles que des tuyaux, des câbles ou similaires, entre deux points de raccordement, dont au moins un est mobile par rapport à l'autre, le maillon de chaîne (10) étant composé de plusieurs parties individuelles (2A, 2B, 3), avec deux éclisses latérales (2A, 2B), chacune avec un corps d'éclisse en matière plastique avec un côté intérieur (I) vers l'intérieur du maillon de chaîne, un côté extérieur (A) opposé à celuici et deux côtés étroits (4A, 4B) s'étendant sensiblement parallèlement à la direction longitudinale, ainsi qu'au moins une traverse séparée (3), en particulier deux traverses séparées opposées (3), pour la liaison amovible des éclisses latérales, ladite au moins une traverse (3) comprenant une partie centrale (7) et, des deux côtés à chaque extrémité, une section de fixation (6),
les éclisses latérales présentant chacune sur au moins un, en particulier sur les deux côtés étroits, une zone de fixation correspondante qui coopère par adhérence, en particulier par adhérence et par complémentarité de forme, avec une section de fixation d'une traverse, chaque section de fixation d'une éclisse latérale (2A, 2B) comprenant un logement de serrage (5) dans le corps de l'éclisse, logement de serrage qui présente deux surfaces de serrage (5A, 5B) opposées du corps de l'éclisse dans la direction longitudinale (L), entre lesquelles une section de fixation (6) de forme complémentaire de ladite au moins une traverse (3) séparée est serrée par une force de serrage;
ladite au moins une traverse (3) étant fabriquée d'une seule pièce en matière plastique et présente, dans la zone d'extrémité, à la suite de chaque section de fixation (6) et des deux côtés en saillie par rapport à la partie centrale (7), deux saillies d'appui (12) avec chacune une surface d'appui (13) pour l'appui sur la face intérieure de l'éclisse latérale (2A, 2B).

2. Maillon de chaîne selon la revendication 1, **caractérisé en ce que** chacune des deux sections de fixation (6) d'une traverse (3) comprend deux surfaces de contre-serrage (6A, 6B) orientées longitudinalement et de forme complémentaire aux surfaces de serrage (5A, 5B), et chacune des deux sections de fixation (6) comprend une zone de matière pleine continue entre ces surfaces de contre-serrage (6A, 6B).

3. Maillon de chaîne selon la revendication 2, **caractérisé en ce que** la zone de matériau plein des sections de fixation (6) présente une épaisseur de matériau dans la direction de l'axe longitudinal (M) de la traverse (3) sensiblement égale à l'épaisseur de matériau de l'éclisse latérale (2A, 2B) autour du logement de serrage et/ou présente une épaisseur de matériau dans la direction de la hauteur (H) supérieure à celle d'une partie centrale (7) de type plaque de la traverse.

4. Maillon de chaîne selon la revendication 1, 2 ou 3, **caractérisé en ce que** chaque logement de serrage (5)(6) comporte une saillie de verrouillage transversale (5C) allongée et s'étendant dans la direction longitudinale et, de manière correspondante, chaque section de fixation (6) comporte une rainure de verrouillage transversale allongée complémentaire (6C) retenant contre une translation perpendiculairement au plan principal de l'éclisse et, notamment, qui retient les surfaces d'appui (13) des saillies d'appui (12) respectivement en appui contre la face interne de l'éclisse latérale (2A, 2B).

5. Maillon de chaîne selon la revendication 4, **caractérisé en ce que** la saillie de verrouillage transversal (5C) et la rainure de verrouillage transversal (6C) s'étendent dans la direction longitudinale sur au moins une partie prépondérante de la distance entre les surfaces de serrage (5A, 5B) et les surfaces de contre-serrage (6A, 6B), respectivement, et/ou se rétrécissent ou s'effilent en direction du plan principal de l'éclisse.

6. Maillon de chaîne selon l'une des revendications 1 à 5, **caractérisé en ce que** les deux logements de serrage (5) situés sur les côtés étroits (4A, 4B) d'une éclisse latérale (2A, 2B) sont de forme identique, notamment centrée et symétrique par rapport au plan médian de la hauteur de l'éclisse (A-A), les deux surfaces de serrage (5A, 5B) présentant chacune au moins une zone de surface convexe et/ou concave.

7. Maillon de chaîne selon la revendication 6, **caractérisé en ce que** chaque surface de serrage (5A, 5B) présente une zone de surface convexe, qui représente de préférence une partie de surface prépondérante de la surface de serrage et s'élargit vers le côté étroit (4A, 4B), et **en ce que** les surfaces de serrage opposées (6A, 6B) sont réalisées avec au moins une zone de surface concave correspondante, au moins les zones de surface (5A, 5B; 6A, 6B) étant réalisées avec une section transversale arrondie.

8. Maillon de chaîne selon l'une des revendications 1 à 7, **caractérisé en ce que** chaque logement de serrage (5)
- est réalisé sous la forme d'un évidement de bord débouchant des deux côtés vers le côté intérieur (I) et vers le côté extérieur (A) de l'éclisse latérale (2A', 2B) sur le côté étroit (4A, 4B);
et/ou
- est réalisé intégralement dans le corps de l'éclisse en tant qu'évidement de bord continu au moins partiellement entre le côté intérieur (I) et le côté extérieur (A).

9. Maillon de chaîne selon l'une quelconque des revendications 1 à 8, **caractérisé en ce que** le maillon de chaîne comprend deux éclisses latérales (2A, 2B) et deux traverses séparées opposées (3) pour relier de manière amovible les éclisses latérales (2A, 2B) entre elles, et **en ce que** chaque éclisse latérale (2A, 2B) et chaque traverse (3) est fabriquée sous la forme d'un corps monobloc en matière plastique, en particulier sous la forme d'une pièce moulée par injection sans contredépouille.

10. Traverse (3) pour un maillon de chaîne (10) d'une chaîne porte-câbles selon l'une des revendications 1 à 9, la traverse (3) étant fabriquée sous la forme d'un corps d'une seule pièce en matière plastique s'étendant le long d'un axe longitudinal (M), en particulier symétriquement par rapport à un plan médian perpendiculaire à l'axe longitudinal, avec une partie centrale (7) en forme de plaque et avec, des deux côtés à chaque extrémité, respectivement une section de fixation (6) pour la liaison avec une éclisse latérale,
- chacune des deux sections de fixation (6) comprenant deux surfaces de contre-serrage (6A, 6B) détournées l'une de l'autre et orientées dans la direction perpendiculaire à l'axe longitudinal de la traverse, pour une coopération par adhérence avec des surfaces de serrage complémentaires (5A, 5B) d'une éclisse latérale (2A, 2B), et comprenant une zone de matériau plein continue entre ces surfaces de contre-serrage; et
- la traverse présentant, dans la zone d'extrémité, à la suite de chaque section de fixation (6) et de part et d'autre en saillie par rapport à la partie centrale (7), deux saillies d'appui (12) présentant chacune une surface d'appui (13) destinée à venir en appui contre la face intérieure de l'éclisse latérale (2A, 2B).

11. Traverse selon la revendication 10, **caractérisée en ce qu'**entre la partie centrale (7) et chaque section de fixation (6), adjacente à la section de fixation respective, un trou de passage (30) est prévu des deux côtés, perpendiculairement à travers la traverse (3), de sorte qu'un maillon de chaîne peut être fixé par vissage (32) à l'aide de la traverse sur un point de raccordement.

12. Traverse selon la revendication 10 ou 11, **caractérisée en ce que** la traverse présente, à partir de chaque section de fixation, en particulier sur le côté extérieur, deux entretoises de renforcement qui s'étendent vers le milieu de la partie centrale en forme de plaque, en particulier au voisinage du trou de passage, et qui sont fabriquées en une seule pièce avec le corps en matière plastique.

13. Traverse selon la revendication 10, 11 ou 12, **caractérisée en ce que** la traverse (3) présente une partie centrale (7) en forme de plaque et présente, à partir de chaque saillie d'appui (12), une entretoise de renforcement (14) qui s'étend vers la partie centrale (7) en forme de plaque.
